(19) Europäisches Patentamt
European Patent Office
Office européen des brevets

(11) **EP 3 855 541 A1**

(12) **EUROPEAN PATENT APPLICATION**
published in accordance with Art. 153(4) EPC

(43) Date of publication:
**28.07.2021 Bulletin 2021/30**

(51) Int Cl.:
*H01M 4/525* (2010.01)  *C01G 53/00* (2006.01)
*H01M 4/505* (2010.01)

(21) Application number: **19861675.7**

(22) Date of filing: **02.09.2019**

(86) International application number:
**PCT/JP2019/034407**

(87) International publication number:
**WO 2020/059471 (26.03.2020 Gazette 2020/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **21.09.2018  JP 2018178052**
                **24.05.2019  JP 2019097568**

(71) Applicant: **Tanaka Chemical Corporation Fukui-shi, Fukui 910-3131 (JP)**

(72) Inventors:
• **HOSONO Akari**
  **Fukui-shi, Fukui 910-3131 (JP)**
• **IIDA Yasutaka**
  **Fukui-shi, Fukui 910-3131 (JP)**

(74) Representative: **Weickmann, Hans Weickmann & Weickmann Patent- und Rechtsanwälte PartmbB Postfach 860 820 81635 München (DE)**

(54) **POSITIVE ELECTRODE ACTIVE MATERIAL FOR SECONDARY BATTERY, AND METHOD FOR PRODUCING SAME**

(57)     An object of the present invention is to provide: a positive electrode active material for secondary batteries that can exhibit excellent cycle characteristics under both room temperature and high temperature environments; and a method for producing the same.

The positive electrode active material for secondary batteries having a layered structure containing at least nickel, cobalt, and manganese, as single-crystal particles and/or secondary particles that are aggregates of a plurality of primary particles, wherein: an average particle strength of particles having a particle size of (D50) $\pm$ 1.0 $\mu$m is 200 MPa or more, wherein (D50) is a particle size at a cumulative volume percentage of 50% by volume; and $\beta/\alpha$ is set to satisfy $0.97 \leq \beta/\alpha \leq 1.25$, provided that $\alpha$ is a full width at half maximum of a lower angle peak among two diffraction peaks appearing in a range of $2\theta = 64.5 \pm 1°$ in an X-ray diffraction pattern, and $\beta$ is a full width at half maximum of a higher angle peak among the diffraction peaks.

FIG.2A

EP 3 855 541 A1

FIG.2B

**Description**

Technical Field

The present invention relates to a positive electrode active material for secondary batteries, and a method for producing the same, and particularly relates to a positive electrode active material for secondary batteries that can exhibit excellent cycle characteristics under both room temperature and high temperature environments, and a method for producing the same.

Background Art

In recent years, secondary batteries have been used in a variety of fields such as portable devices and vehicles that use electricity alone or in combination as a power source. As a positive electrode active material of the secondary battery, for example, a lithium metal composite oxide powder containing nickel, cobalt, and manganese, and the like is used.

In recent years, the secondary battery has been required to be able to stably exhibit a high output for change in an environment such as an ambient temperature. Therefore, the positive electrode active material for secondary batteries is required to stably provide excellent cycle characteristics even if the environment such as an ambient temperature varies.

Then, for example, in order to stably provide good cycle characteristics under a high temperature condition, a lithium-nickel-cobalt-manganese composite oxide positive electrode material has been proposed which has the general formula $Li_aNi_xCo_yMn_zMbO_2$ set to satisfy $1.0 \leq a \leq 1.2$, $0.30 \leq x \leq 0.90$, $0.05 \leq y \leq 0.40$, $0.05 \leq z \leq 0.50$, and $x + y + z = 1$, and has a spherical or spherical-like layered structure (Patent Literature 1). The lithium-nickel-cobalt-manganese composite oxide positive electrode material of Patent Literature 1 includes primary single-crystal particles and a small amount of secondary agglomerated particles. The particle size of the primary single-crystal particles is controlled to 0.5 to 10 $\mu$m and a cumulative percentage of particles having a particle size of 5 $\mu$m or less is controlled to be greater than 60%.

However, in Patent Literature 1, excellent cycle characteristics are provided under a slightly high temperature condition, but there is room for improvement in providing excellent cycle characteristics over a temperature range between an room temperature and a high temperature. Thus, in the conventional positive electrode active material for secondary batteries, an improvement in the cycle characteristics under a predetermined temperature condition is disclosed.

Meanwhile, for the usage environment of the secondary battery, a usage environment such as an ambient temperature may vary depending on the usage condition and installation environment and the like of a device to be mounted. Therefore, a positive electrode active material for secondary batteries which can stably exhibit excellent cycle characteristics even if the usage environment such as an ambient temperature varies is required.

Document List

Patent Literature

Patent Literature 1: Japanese Patent Application Laid-Open No. 2018-045998

Summary of Invention

Technical Problem

In view of the above circumstances, an object of the present invention is to provide a positive electrode active material for secondary batteries that can exhibit excellent cycle characteristics under both room temperature and high temperature environments, and a method for producing the same.

Solution to Problem

An aspect of the present invention is a positive electrode active material for secondary batteries having a layered structure containing at least one or more of nickel, cobalt, and manganese, as single-crystal particles and/or secondary particles that are aggregates of a plurality of primary particles,
wherein:

an average particle strength of particles having a particle size of (D50) $\pm 1.0$ $\mu$m is 200 MPa or more, wherein (D50) is a particle size at a cumulative volume percentage of 50% by volume; and

β/α is set to satisfy $0.97 \leq β/α \leq 1.25$, provided that α is a full width at half maximum of a lower angle peak among two diffraction peaks appearing in a range of $2θ = 64.5 \pm 1°$ in powder X-ray diffraction measurement using CuKα rays, and β is a full width at half maximum of a higher angle peak among the diffraction peaks.

Herein, the average particle strength of the positive electrode active material for secondary batteries means a value obtained by calculating particle strength of one particle of the positive electrode active material for secondary batteries arbitrarily selected in the particle size of (D50) $\pm$ 1.0 μm, wherein (D50) is a particle size at a cumulative volume percentage of 50% by volume, from particle strength (MPa) = $2.8 \times$ load during crushing (N)/($π \times$ particle diameter (mm) $\times$ particle diameter (mm)) based on a value of a load (N) during crushing measured in a micro compression tester MCT-510, manufactured by Shimadzu Corporation, performing the operation for ten particles, and averaging the particle strengths of the ten particles.

Another aspect of the present invention is a positive electrode active material for secondary batteries having a layered structure containing at least one or more of nickel, cobalt, and manganese, as single-crystal particles and/or secondary particles that are aggregates of a plurality of primary particles, wherein:

an average particle strength of particles having a particle size of (D50) $\pm 1.0$ μm is 200 MPa or more, wherein (D50) is a particle size at a cumulative volume percentage of 50% by volume; and
when a rate of change of a lattice constant between before and after a cycle test is represented by (a-axis before cycle test/a-axis after cycle test) $\times$ 100 = A and (c-axis before cycle test/c-axis after cycle test) $\times$ 100 = C in X-ray diffraction measurement of a positive electrode before and after the cycle test using CuKα rays, at least one of A and C is 99.30% or more and 100.90% or less in the cycle tests at 25°C and 60°C.

The "cycle test" means a charge/discharge test of a laminated cell prepared using a positive electrode active material for secondary batteries, for 1000 cycles at 25°C and 500 cycles at 60°C during charge at 4.2 V/CC and 2 C and discharge at 3.0 V/CC and 2 C.

Another aspect of the present invention is the positive electrode active material for secondary batteries, represented by the following general formula (1):

$$Li[Li_a(Mi_xM2_y)_{1-a}]O_{2+b} \qquad (1)$$

wherein: $0 \leq a \leq 0.30$, $-0.30 \leq b \leq 0.30$, $0.9 \leq x \leq 1.0$, $0 \leq y \leq 0.1$, and $x + y = 1$ are satisfied;
M1 means a metal element composed of at least one or more of Ni, Co, and Mn; and
M2 means at least one metal element selected from the group consisting of Fe, Cu, Ti, Mg, Al, W, Zn, Sn, Zr, Ga, V, B, Mo, As, Ge, P, Pb, Si, Sb, Nb, Ta, Re, and Bi.

Another aspect of the present invention is the positive electrode active material for secondary batteries, wherein the D50 that is a particle size at a cumulative volume percentage of 50% is 2.0 μm or more and 20.0 μm or less.

Another aspect of the present invention is the positive electrode active material for secondary batteries, wherein a BET specific surface area of the active material is 0.1 m$^2$/g or more and 5.0 m$^2$/g or less.

Another aspect of the present invention is a secondary battery including the positive electrode active material for secondary batteries.

Another aspect of the present invention is a method for producing a positive electrode active material for secondary batteries, the method including:

a step of adding a lithium (Li) compound to composite hydroxide particles containing at least one or more of nickel (Ni), cobalt (Co), and manganese (Mn) such that an atomic ratio of Li to a metal element (M1) composed of at least one or more of Ni, Co, and Mn is set to satisfy $1.00 \leq Li/M1 \leq 1.30$, to obtain a mixture of the lithium compound with the composite hydroxide particles; and
a main firing step of firing the mixture at a firing temperature represented by the following formula:

$$p \geq -600q + 1603$$

wherein: q is an atomic ratio (Li/M1) of Li to a total of the metal element (M1) composed of at least one or more of Ni, Co, and Mn, and is set to satisfy $1.00 \leq q \leq 1.30$; and p is a main firing temperature, and means $940°C < p \leq 1100°C$, the method further including, in addition to the main firing step, at least one of the following steps (1) to (3):

(1) a pre-firing step performed at a firing temperature of 300°C or higher and 800°C or lower before the main firing step;

(2) a tempering step performed at a firing temperature of 600°C or higher and 900°C or lower after the main firing step; and

(3) a step of adding a metal represented by M2 before the main firing step and/or the tempering step, wherein M2 means at least one metal element selected from the group consisting of Fe, Cu, Ti, Mg, Al, W, Zn, Sn, Zr, Ga, V, B, Mo, As, Ge, P, Pb, Si, Sb, Nb, Ta, Re, and Bi.

Another aspect of the present invention is the method for producing a positive electrode active material for secondary batteries including a step of setting a particle size distribution width of the composite hydroxide particles so as to satisfy $0.40 \leq (D90 - D10)/D50 \leq 1.00$ before the step of mixing the lithium compound with the composite hydroxide particles.

Another aspect of the present invention is the method for producing a positive electrode active material for secondary batteries, wherein a proportion of a surface area (S) of the mixture including a contact surface with a sagger to a volume (V) of the mixture when filling the sagger with the mixture in the main firing step is set to satisfy $0.08 \leq S/V \leq 2.00$.

Effects of Invention

According to the aspect of the present invention, the average particle strength of particles having a particle size of (D50) $\pm$ 1.0 $\mu$m is 200 MPa or more, wherein (D50) is a particle size at a cumulative volume percentage of 50% by volume, and $\beta/\alpha$ is set to satisfy $0.97 \leq \beta/\alpha \leq 1.25$, provided that $\alpha$ is a full width at half maximum of a lower angle peak among two diffraction peaks appearing in a range of $2\theta = 64.5 \pm 1°$ in a powder X-ray diffraction pattern using CuK$\alpha$ rays, and $\beta$ is a full width at half maximum of a higher angle peak among the two diffraction peaks. This makes it possible to provide a positive electrode active material for secondary batteries that can exhibit excellent cycle characteristics under both room temperature and high temperature environments.

According to another aspect of the present invention, the average particle strength of particles having a particle size of (D50) $\pm$ 1.0 $\mu$m is 200 MPa or more, wherein (D50) is a particle size at a cumulative volume percentage of 50% by volume, and when a rate of change of a lattice constant between before and after a cycle test is represented by (a-axis before cycle test/a-axis after cycle test) $\times$ 100 = A and (c-axis before cycle test/c-axis after cycle test) $\times$ 100 = C in an X-ray diffraction pattern of the cycle test of a positive electrode using CuK$\alpha$ rays, at least one of A and C is 99.30% or more and 100.90% or less in the cycle tests at 25°C and 60°C. This makes it possible to provide a positive electrode active material for secondary batteries that can exhibit excellent cycle characteristics under both room temperature and high temperature environments.

According to another aspect of the present invention, the mixture of the lithium compound with the composite hydroxide particles at an atomic ratio of $1.00 \leq Li/M1 \leq 1.30$ is fired at a firing temperature represented by $p \geq -600q + 1603$ in main firing, wherein: q is an atomic ratio (Li/M1) of Li to a total of the metal element (M1) composed of at least one or more of Ni, Co, and Mn, and is set to satisfy $1.00 \leq q \leq 1.30$; and p is a main firing temperature and means 940°C $< p \leq 1100°$C. This makes it possible to provide a positive electrode active material for secondary batteries that can exhibit excellent cycle characteristics under both room temperature and high temperature environments.

Brief Description of Drawings

[FIG. 1] A scanning electron microscope (SEM) image of a positive electrode active material for secondary batteries of the present invention.

[FIG. 2] FIG. 2A and FIG. 2B are a schematic view schematically showing an example of a lithium secondary battery.

Description of Embodiments

Hereinafter, a positive electrode active material for secondary batteries of the present invention will be described in detail. The positive electrode active material for secondary batteries of the present invention has a layered structure containing at least one or more of nickel, cobalt, and manganese, as single-crystal particles and/or secondary particles that are aggregates of a plurality of primary particles. The shape of the positive electrode active material for secondary batteries of the present invention is not particularly limited, and the positive electrode active material for secondary batteries has a wide variety of shapes. Examples thereof include a substantially sphere shape, a substantially cubic shape, and a substantially cuboidal shape.

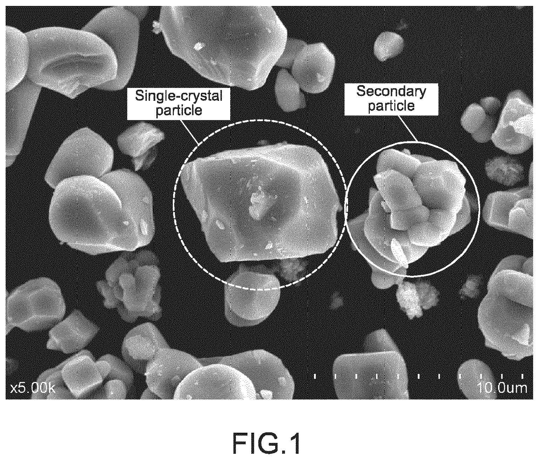

The positive electrode active material for secondary batteries of the present invention contains any one of the single-crystal particles and the secondary particles that are aggregates of a plurality of primary particles, or both the single-crystal particles and the secondary particles. In FIG. 1 that is a scanning electron microscope (SEM) image of the positive electrode active material for secondary batteries of the present invention, both the single-crystal particles and the secondary particles are contained. As shown in FIG. 1, the single-crystal particles are in a form of primary particles, and the secondary particles are particles that are aggregates of a plurality of primary particles.

The crystal structure of the positive electrode active material for secondary batteries of the present invention is a layered structure, and more preferably a hexagonal crystal structure or a monoclinic crystal structure.

The hexagonal crystal structure belongs to any one space group selected from the group consisting of P3, P31, P32, R3, P-3, R-3, P312, P321, P3112, P3121, P3212, P3221, R32, P3 m1, P31m, P3c1, P31c, R3m, R3c, P-31m, P-31c, P-3m1, P-3c1, R-3m, R-3c, P6, P61, P65, P62, P64, P63, P-6, P6/m, P63/m, P622, P6122, P6522, P6222, P6422, P6322, P6mm, P6cc, P63cm, P63mc, P-6m2, P-6c2, P-62m, P-62c, P6/mmm, P6/mcc, P63/mcm, and P63/mmc.

The monoclinic crystal structure belongs to any one space group selected from the group consisting of P2, P21, C2, Pm, Pc, Cm, Cc, P2/m, P21/m, C2/m, P2/c, P21/c, and C2/c.

Among these, from the viewpoint of obtaining a secondary battery having a high discharge capacity, the crystal structure is particularly preferably a hexagonal crystal structure that belongs to a space group R-3m or a monoclinic crystal structure that belongs to a C2/m.

In the positive electrode active material for secondary batteries of the present invention, the average particle strength of particles having a particle size of (D50) $\pm$ 1.0 $\mu$m, wherein (D50) is a particle size at a cumulative volume percentage of 50% by volume (hereinafter, may be merely referred to as "D50"), that is, (D50) -1.0 $\mu$m to (D50) + 1.0 $\mu$m is 200 MPa or more. The excellent average particle strength is considered to be due to the fact that the positive electrode active material for secondary batteries of the present invention contains the single-crystal particles. The average particle strength of (D50) $\pm$ 1.0 $\mu$m is not particularly limited as long as it is 200 MPa or more, but the lower limit value thereof is preferably 230 MPa, more preferably 250 MPa, and particularly preferably 310 MPa, from the viewpoint of exhibiting better cycle characteristics under both room temperature and high temperature environments. Meanwhile, the upper limit value of the average particle strength of (D50) $\pm$ 1.0 $\mu$m is not particularly limited, but it is preferably 3000 MPa, more preferably 2200 MPa, still more preferably 1000 MPa, and particularly preferably 700 MPa, from the viewpoint of allowing efficient production, for example. The lower limit values and the upper limit values can be arbitrarily combined.

The lower limit value of D50 of the positive electrode active material for secondary batteries of the present invention is not particularly limited, but it is preferably 2.0 $\mu$m, more preferably 2.5 $\mu$m, and particularly preferably 3.0 $\mu$m, from the viewpoint of improving handleability. Meanwhile, the upper limit value of D50 of the positive electrode active material for secondary batteries is preferably 20.0 $\mu$m, and particularly preferably 15.0 $\mu$m, from the viewpoint of a balance between improvement in a density and securement of a contact surface with an electrolytic solution. The lower limit values and the upper limit values can be arbitrarily combined.

The positive electrode active material for secondary batteries of the present invention has at least any one of a configuration of a full width at half maximum of a diffraction peak in which $\beta/\alpha$ is set to satisfy $0.97 \leq \beta/\alpha \leq 1.25$, provided that $\alpha$ is a full width at half maximum of a lower angle diffraction peak among two diffraction peaks appearing in a range of $2\theta = 64.5 \pm 1°$ in powder X-ray diffraction measurement using CuK$\alpha$ rays, and $\beta$ is a full width at half maximum of a higher angle peak among the diffraction peaks, or a configuration of a rate of change of a lattice constant in which, when a rate of change of a lattice constant between before and after a cycle test is represented by (a-axis before cycle test/a-axis after cycle test) $\times$ 100 = A and (c-axis before cycle test/c-axis after cycle test) $\times$ 100 = C in an X-ray diffraction pattern of a positive electrode using CuK$\alpha$ rays, at least one of A and C is 99.30% or more and 100.90% or less in the cycle tests at 25°C and 60°C.

Regarding Full Width at Half Maximum of Powder Diffraction Peak Using CuK$\alpha$ Rays

The range of the average particle strength of (D50) $\pm$ 1.0 $\mu$m and the full width at half maximum of the diffraction peak of $0.97 \leq \beta/\alpha \leq 1.25$ can provide the positive electrode active material for secondary batteries that can exhibit excellent cycle characteristics under both room temperature and high temperature environments. That is, the present inventors found that the full width at half maximum of the diffraction peak satisfies the relation of $0.97 \leq \beta/\alpha \leq 1.25$, which contributes to the imparting of excellent cycle characteristics under both room temperature and high temperature environments.

The $\beta/\alpha$ value is not particularly limited as long as it is 0.97 or more and 1.25 or less, but from the viewpoint of stably providing better cycle characteristics under both room temperature and high temperature environments, the $\beta/\alpha$ value is more preferably 1.00 or more and 1.20 or less, and particularly preferably 1.03 or more and 1.13 or less.

Regarding Rate of Change of Lattice Constant

The range of the average particle strength in the range of (D50) $\pm$ 1.0 $\mu$m and the rate of change of the lattice constant in which the at least one of A and C is 99.30% or more and 100.90% or less in the cycle tests at 25°C and 60°C can provide the positive electrode active material for secondary batteries that can exhibit excellent cycle characteristics under both room temperature and high temperature environments. That is, the present inventors found that, in the cycle test at 25°C (room temperature cycle test) and the cycle test at 60°C (high temperature cycle test), the rate of change of the lattice constant of at least one of the a-axis and the c-axis is controlled to 99.30% or more and 100.90% or less, which contributes to the imparting of excellent cycle characteristics under both room temperature and high temperature environments. This is considered to be due to the fact that change in the crystal structure of the positive electrode active material for secondary batteries between before and after the cycle test is reduced in the room temperature and high temperature cycle tests.

At least one of A and C is not particularly limited as long as it is 99.30% or more and 100.90% or less in the cycle tests at 25°C and 60°C, but from the viewpoint of stably providing better cycle characteristics under both room temperature and high temperature environments, both A and C are preferably 99.30% or more and 100.90% or less, and particularly preferably 99.32% or more and 100.90% or less.

The composition of the positive electrode active material for secondary batteries of the present invention is not particularly limited as long as it is a composition containing a metal element composed of at least one or more of nickel, cobalt, and manganese, but examples thereof include a positive electrode active material for secondary batteries represented by the following general formula (1):

$$Li[Li_a(M1_xM2_y)_{1-a}]O_{2+b} \qquad (1)$$

(in the formula, a is preferably set to satisfy $0 \leq a \leq 0.30$, more preferably $0 \leq a \leq 0.20$, and particularly preferably $0 \leq a \leq 0.10$; b is not particularly limited, but it is preferably set to satisfy $-0.30 \leq b \leq 0.30$, more preferably $-0.20 \leq b \leq 0.20$, and particularly preferably $0 \leq b \leq 0.20$; x is set to satisfy $0.9 \leq x \leq 1.0$; y is preferably set to satisfy $0 \leq y \leq 0.10$, more preferably $0 \leq y \leq 0.05$, and particularly preferably $0 \leq y \leq 0.02$; x and y are set to satisfy $x + y = 1$; M1 is a metal element composed of one or more of Ni, Co, and Mn; the compositions of Ni, Co, and Mn are not particularly limited, but the composition range of Ni is preferably 10 mol % or more and 90 mol % or less, more preferably 30 mol % or more and 80 mol % or less, and particularly preferably 50 mol % or more and 60 mol % or less; the composition range of Co is preferably 10 mol % or more and 50 mol % or less, and more preferably 10 mol % or more and 30 mol % or less; the composition range of Mn is preferably 0 mol % or more and 50 mol % or less, and more preferably 0 mol % or more and 40 mol % or less; and M2 means at least one metal element selected from the group consisting of Fe, Cu, Ti, Mg, Al, W, Zn, Sn, Zr, Ga, V, B, Mo, As, Ge, P, Pb, Si, Sb, Nb, Ta, Re, and Bi.). Among these, M2 that is an arbitrary metal element is contained, which can stably provide better cycle characteristics under both room temperature and high temperature environments. Among these arbitrary metal elements, Zr and Al are preferable.

The positive electrode active material for secondary batteries of the present invention can be used as a positive electrode active material of a lithium-ion secondary battery, for example.

The BET specific surface area of the positive electrode active material for secondary batteries of the present invention is not particularly limited, but from the viewpoint of a balance between improvement in a density and securement of a contact surface with an electrolytic solution, for example, the lower limit value thereof is preferably 0.10 $m^2$/g, and particularly preferably 0.30 $m^2$/g. Meanwhile, the upper limit value thereof is preferably 5.0 $m^2$/g, more preferably 4.0 $m^2$/g, and particularly preferably 2.0 $m^2$/g. The upper limit values and the lower limit values can be arbitrarily combined.

Thereafter, an example of a method for producing a positive electrode active material for secondary batteries of the present invention will be described.

In the producing method, for example, first, composite hydroxide particles are prepared, which contain at least one or more of nickel, cobalt, and manganese (hereinafter, may be merely referred to as "composite hydroxide particles"). The composite hydroxide particles are precursors of the positive electrode active material for secondary batteries. The precursor used for the present invention may be a composite oxide containing at least one or more of nickel, cobalt, and manganese. In a method for preparing the composite hydroxide particles, first, one or more metal salt solutions of a nickel salt solution (for example, a sulfate salt solution), a cobalt salt solution of (for example, a sulfate salt solution), and a manganese salt solution of (for example, a sulfate salt solution), a complexing agent, and a pH adjuster are appropriately added into a reaction tank, where a reaction takes place according to a coprecipitation method to prepare the composite hydroxide particles, thereby obtaining a slurry-like suspension containing the composite hydroxide particles. As a solvent for the suspension, water is used, for example.

The complexing agent to be added to the metal salt solution is not particularly limited as long as it can form a complex with an ion of nickel, cobalt, or manganese in an aqueous solution, and examples thereof include ammonium ion-supplying bodies (ammonium sulfate, ammonium chloride, ammonium carbonate, and ammonium fluoride and the like), hydrazine, ethylenediaminetetraacetic acid, nitrilotriacetic acid, uracildiacetic acid, and glycine. If necessary, an alkali metal hydroxide (for example, sodium hydroxide or potassium hydroxide) may be added in order to adjust the pH value of the aqueous solution during precipitation.

When a pH adjuster and a complexing agent are continuously supplied into a reaction tank as appropriate in addition to the metal salt solution, the metals (one or more of nickel, cobalt, and manganese) of the metal salt solution are coprecipitated to prepare the composite hydroxide particles. During the coprecipitation reaction, the substances in the reaction tank are appropriately stirred while the temperature of the reaction tank is controlled within the range of, for example, 10°C to 80°C, and preferably 20 to 70°C, and the pH value in the reaction tank is controlled within the range of, for example, a pH of 9 to a pH of 13, and preferably a pH of 11 to 13 at a solution temperature of 40°C as a standard. Examples of the reaction tank include a continuous type to allow the formed composite hydroxide particles to overflow for the purpose of separation, and a batch type to prevent the composite hydroxide particles from being discharged out of the system until the end of the reaction.

The composite oxide particles obtained as above are filtered out from the suspension, washed with water, and heat-treated to obtain powdered composite hydroxide particles. The obtained composite hydroxide particles may be subjected to a step of narrowing (D90 - D10)/D50 of a particle size distribution width by a dry classifier, for example, if necessary.

The lower limit value of D50 of the composite hydroxide particles that are the precursors for the positive electrode active material for secondary batteries of the present invention is not particularly limited, but it is preferably 2.0 $\mu$m, more preferably 2.5 $\mu$m, and particularly preferably 3.0 $\mu$m, from the viewpoint of improving handleability. Meanwhile, the upper limit value of D50 of the composite hydroxide particles is preferably 25.0 $\mu$m, and particularly preferably 20.0 $\mu$m, from the viewpoint of improving a reaction with the lithium compound during firing. The upper limit values and the lower limit values can be arbitrarily combined.

The particle size distribution of the composite hydroxide particles is not particularly limited, but the lower limit value of (D90 - D10)/D50 is preferably 0.40, more preferably 0.50, and particularly preferably 0.70, from the viewpoint of a range allowing efficient production. Meanwhile, the upper limit value of (D90 - D10)/D50 of the composite hydroxide particles is preferably 1.00, more preferably 0.96, from the viewpoint of providing excellent cycle characteristics under a room temperature environment while providing better cycle characteristics even under a high temperature environment, and particularly preferably 0.80 from the viewpoint of providing better cycle characteristics under a room temperature environment. The lower limit values and the upper limit values can be arbitrarily combined.

Thereafter, a lithium compound is added to the obtained powdered composite hydroxide particles to prepare a mixture of the composite hydroxide particles and the lithium compound. At this time, the lithium compound is added to provide an atomic ratio of $1.00 \leq Li/M1 \leq 1.30$. The lithium compound is not particularly limited as long as it is a compound containing lithium, and examples thereof include lithium carbonate and lithium hydroxide.

Thereafter, the obtained mixture is fired at a firing temperature represented by the following formula (hereinafter, may be referred to as main firing). The main firing is performed at a firing temperature represented by the formula: $p \geq -600q + 1603$ (in the formula, q is an atomic ratio (Li/M1) of Li to a total of a metal element (M1) composed of at least one or more of Ni, Co, and Mn, and is set to satisfy $1.00 \leq q \leq 1.30$, and p is a main firing temperature and means 940°C $< p \leq 1100$°C.). A firing time in the firing step at the firing temperature is not particularly limited, but for example, it is preferably 5 to 20 hours, and particularly preferably 8 to 15 hours. From the viewpoint of keeping the temperature of a material and the temperature of a firing furnace equivalent, a temperature rising speed in the main firing is preferably 50 to 550°C/h, more preferably 100 to 400°C/h, and particularly preferably 140 to 380°C/h. Examples of the atmosphere of the main firing include, but are not particularly limited to, air and oxygen. Examples of the firing furnace used for the main firing include, but are not particularly limited to, a stationary box type furnace and a roller hearth type continuous furnace. In the method for producing the positive electrode active material for secondary batteries of the present invention, in addition to the main firing step, at least one of a pre-firing step before the main firing step, a tempering step after the main firing step, and a step of adding at least one metal component selected from the group consisting of Fe, Cu, Ti, Mg, Al, W, Zn, Sn, Zr, Ga, V, B, Mo, As, Ge, P, Pb, Si, Sb, Nb, Ta, Re, and Bi before the main firing step and/or the tempering step is performed.

The lower limit value of a proportion S/V of a surface area (S) of the mixture of the composite hydroxide particles with the lithium compound as a filler, including a contact surface of the filler with a sagger for firing, to a volume (V) of the filler when filling the sagger with the mixture in the main firing step is not particularly limited, but it is preferably 0.08 $mm^2/mm^3$ from the viewpoint of making the temperature of the filler uniform. The upper limit value is not particularly limited, but it is preferably 2.00 $mm^2/mm^3$, more preferably 0.68 $mm^2/mm^3$, and particularly preferably 0.36 $mm^2/mm^3$ from the viewpoint of productivity. The upper limit values and the lower limit values can be arbitrarily combined. Examples of the sagger include, but are not particularly limited to, a sagger having an inside dimension of 130 mm $\times$ 130 mm $\times$ 88 mm or 280 mm $\times$ 280 mm $\times$ 88 mm.

The pre-firing step is a step of releasing and oxidizing a gas contained in a raw material to provide a positive electrode active material for secondary batteries having more preferable crystallinity. The pre-firing is preferably performed at, for example, 300°C or higher and 800°C or lower, and particularly preferably 650°C or higher and 760°C or lower. A firing time in the pre-firing is not particularly limited, but for example, it is preferably 1 to 20 hours, and particularly preferably 3 to 10 hours. From the viewpoint of keeping the temperature of a material and the temperature of a firing furnace equivalent, a temperature rising speed in the pre-firing is preferably 50 to 550°C/h, more preferably 100 to 400°C/h, and particularly preferably 140 to 380°C/h. Examples of the atmosphere of the pre-firing include, but are not particularly limited to, air and oxygen. Examples of the firing furnace used for the pre-firing include, but are not particularly limited to, a stationary box type furnace and a roller hearth type continuous furnace.

The tempering step is a step of providing a positive electrode active material for secondary batteries having more preferable crystallinity. The tempering step is preferably performed at, for example, 600°C or higher and 900°C or lower, and particularly preferably 650°C or higher and 860°C or lower. A firing time in the tempering is not particularly limited, but for example, it is preferably 1 to 20 hours, and particularly preferably 3 to 10 hours. From the viewpoint of keeping the temperature of a material and the temperature of a firing furnace equivalent, a temperature rising speed in the tempering is preferably 50 to 550°C/h, more preferably 100 to 400°C/h, and particularly preferably 140 to 380°C/h. Examples of the atmosphere of the tempering include, but are not particularly limited to, air and oxygen. Examples of the firing furnace used for the tempering include, but are not particularly limited to, a stationary box type furnace and a roller hearth type continuous furnace.

The step of adding at least one metal component selected from the group consisting of Fe, Cu, Ti, Mg, Al, W, Zn, Sn, Zr, Ga, V, B, Mo, As, Ge, P, Pb, Si, Sb, Nb, Ta, Re, and Bi is a step of providing a positive electrode active material for secondary batteries having more preferable crystallinity.

[Secondary Battery]

Subsequently, descriptions will be provided on the configuration of a secondary battery, and also on a positive electrode using the positive electrode active material for secondary batteries of the present invention as a positive electrode active material of the secondary battery, and the secondary battery including the positive electrode. Here, a lithium secondary battery as the secondary battery will be described as an example.

An example of the lithium secondary battery including the positive electrode active material for secondary batteries of the present invention as the positive electrode active material includes a positive electrode, a negative electrode, a separator interposed between the positive electrode and the negative electrode, and an electrolytic solution disposed between the positive electrode and the negative electrode.

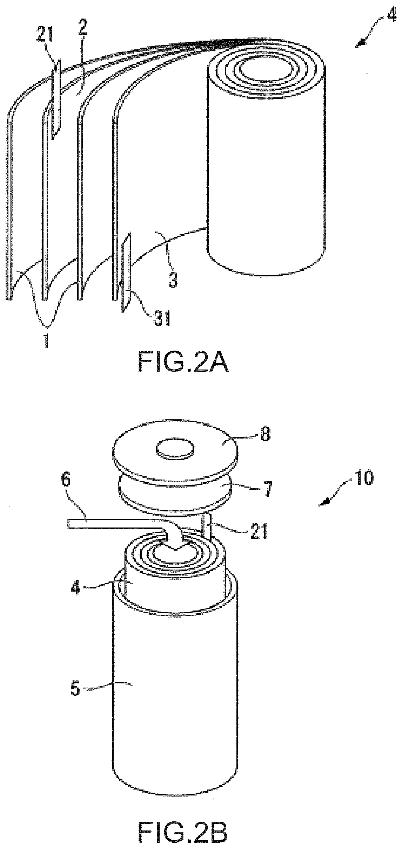

FIG. 2 is a schematic view showing an example of the lithium secondary battery. A cylindrical lithium secondary battery 10 shown in FIG. 2 is produced in the following manner.

First, as shown in FIG. 2A, an electrode group 4 is configured by stacking a pair of belt-like separators 1, a belt-like positive electrode 2 having a positive electrode lead 21 on one end, and a belt-like negative electrode 3 having a negative electrode lead 31 on one end to be wound in an order of the one separator 1, the positive electrode 2, the other separator 1, and the negative electrode 3.

Subsequently, as shown in FIG. 2B, the electrode group 4 and a non-shown insulator are housed in a battery can 5, and a can bottom of the battery can 5 is then sealed. The electrode group 4 is impregnated with an electrolytic solution 6 to dispose an electrolyte between the positive electrode 2 and the negative electrode 3. Furthermore, by sealing an upper part of the battery can 5 with a top insulator 7 and a sealing body 8, it is possible to produce a lithium secondary battery 10.

Examples of the shape of the electrode group 4 include, but are not particularly limited to, a columnar shape such that a sectional shape when cutting the electrode group 4 in a vertical direction to a winding axis is a circle, an oval, a rectangle, and a rectangle with rounded corners.

It is possible to employ a shape defined in IEC 60086 or JIS C 8500 which is standard for batteries determined by the International Electrotechnical Commission (IEC), as the shape of the lithium secondary battery including the electrode group 4 as above. Examples of the shape determined in the standard include a cylindrical shape and a square shape.

Furthermore, the lithium secondary battery is not limited to the winding type configuration, and may have a stacking type configuration in which a stacked structure of a positive electrode, a separator, a negative electrode, and a separator are repeatedly stacked. Examples of the stacking type lithium secondary battery include a so-called coin type battery, a button type battery, and a paper type (or sheet type) battery.

Hereinafter, each configuration of the lithium secondary battery will be described in order.

(Positive Electrode)

The positive electrode of the lithium secondary battery can be produced by, first, preparing a positive electrode mixture including a positive electrode active material (a positive electrode active material for secondary batteries of the present invention), a conductive material, and a binder, and supporting the positive electrode mixture on a positive electrode collector.

(Conductive Material)

A carbon material can be used as the conductive material included in the positive electrode of the lithium secondary battery. Examples of the carbon material include a graphite powder, carbon black (for example, acetylene black), and a fiber-like carbon material. The carbon black has a large surface area in a fine particulate state. Therefore, by adding a small amount of the carbon black into the positive electrode mixture, it is possible to enhance conductivity inside the positive electrode and to enhance charge and discharge efficiency and output characteristics. However, when a large amount of the carbon black is added, both a binding force between the positive electrode mixture and the positive electrode collector by the binder and a binding force inside the positive electrode mixture deteriorate, which rather causes increased internal resistance.

A proportion of the conductive material in the positive electrode mixture can be appropriately selected according to use conditions and the like, but it is preferably 5 parts by mass or more and 20 parts by mass or less with respect to 100 parts by mass of the positive electrode active material. In a case of using a fiber-like carbon material such as a graphitized carbon fiber and a carbon nanotube as the conductive material, it is also possible to lower the proportion.

(Binder)

As the binder included in the positive electrode of the lithium secondary battery, a thermoplastic resin can be used. Examples of the thermoplastic resin include fluorine resins such as polyvinylidene fluoride (hereinafter, may be referred to as PVdF), polytetrafluoroethylene (hereinafter, may be referred to as PTFE), ethylene tetrafluoride/propylene hexafluoride/vinylidene fluoride-based copolymer, propylene hexafluoride/vinylidene fluoride-based copolymer, and ethylene tetrafluoride/perfluorovinyl ether copolymer; and polyolefin resins such as polyethylene and polypropylene. These thermoplastic resins may be used alone or as a mixture of two or more thereof.

By using a fluorine resin and a polyolefin resin among the thermoplastic resins as the binder, and setting a proportion of the fluorine resin to 1 mass % or more and 10 mass % or less and a proportion of the polyolefin resin to 0.1 mass % or more and 2 mass % or less with respect to the whole positive electrode mixture, it is possible to obtain a positive electrode mixture having a high adhesion force with the positive electrode collector and a high bonding force inside the positive electrode mixture.

(Positive Electrode Collector)

As the positive electrode collector included in the positive electrode of the lithium secondary battery, belt-like members serving as a forming material for forming a metal material such as Al, Ni, or stainless steel can be used. Among these, a material processed in a thin film shape using Al as a forming material is preferable from the viewpoints of easy processing and inexpensive cost.

Examples of a method for supporting a positive electrode mixture on a positive electrode collector include, but are not particularly limited to, a method for pressure-molding a positive electrode mixture on a positive electrode collector. A positive electrode mixture may be supported on a positive electrode collector by making a positive electrode mixture into a paste using an organic solvent, coating the obtained positive electrode mixture paste on at least one side of the positive electrode collector, drying, and pressing and fixing the paste thereon.

In a case of making the positive electrode mixture into a paste, examples of the organic solvent that can be used include an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethyl acetamide or N-methyl-2-pyrrolidone (hereinafter, sometimes referred to as NMP). These may be used alone or as a mixture of two or more thereof.

Examples of a method for coating the positive electrode mixture paste on the positive electrode collector include a slit die coating method, a screen coating method, a curtain coating method, a knife coating method, a gravure coating method, and an electrostatic spray method. It is possible to produce the positive electrode by the above-exemplified methods.

(Negative Electrode)

The negative electrode included in the lithium secondary battery is able to be doped/undoped with lithium ions at an electric potential lower than that of the positive electrode, and examples thereof include an electrode in which a negative electrode mixture containing a negative electrode active material is supported on a negative electrode collector and an electrode made of only a negative electrode active material.

(Negative Electrode Active Material)

Examples of the negative electrode active material included in the negative electrode of the lithium secondary battery include a carbon material, a chalcogen compound (oxide, sulfide, and the like), a nitride, a metal, or an alloy, and a material that is able to be doped/undoped with lithium ions at an electric potential lower than that of the positive electrode.

Examples of the carbon material that can be used as the negative electrode active material of the lithium secondary battery include graphites such as natural graphite and artificial graphite, cokes, carbon black, pyrolytic carbons, carbon fiber, and an organic polymer compound fired body.

Examples of the oxide that can be used as the negative electrode active material of the lithium secondary battery include an oxide of silicon represented by Formula $SiO_x$ such as $SiO_2$ and $SiO$ (here, x is a positive real number); an oxide of titanium represented by Formula $TiO_x$ such as $TiO_2$ and $TiO$ (here, x is a positive real number); an oxide of vanadium represented by Formula $VO_x$ such as $V_2O_5$ and $VO_2$ (here, x is a positive real number); an oxide of iron represented by Formula $FeO_x$ such as $Fe_3O_4$, $Fe_2O_3$ and $FeO$ (here, x is a positive real number); an oxide of tin represented by Formula $SnO_x$ such as $SnO_2$ and $SnO$ (here, x is a positive real number); an oxide of tungsten represented by General Formula $WO_x$ such as $WO_3$ and $WO_2$ (here, x is a positive real number); and a composite metal oxide containing lithium and titanium or vanadium such as $Li_4Ti_5O_{12}$ and $LiVO_2$.

Examples of the sulfide that can be used as the negative electrode active material of the lithium secondary battery include a sulfide of titanium represented by Formula $TiS_x$ such as $Ti_2S_3$, $TiS_2$, or $TiS$ (here, x is a positive real number); a sulfide of vanadium represented by Formula $VS_x$ such as $V_3S_4$, $VS_2$, or $VS$ (here, x is a positive real number); a sulfide of iron represented by Formula $FeS_x$ such as $Fe_3S_4$, $FeS_2$, or $FeS$ (here, x is a positive real number); a sulfide of molybdenum represented by Formula $MoS_x$ such as $Mo_2S_3$ or $MoS_2$ (here, x is a positive real number); a sulfide of tin represented by Formula $SnS_x$ such as $SnS_2$ or $SnS$ (here, x is a positive real number); a sulfide of tungsten represented by Formula $WS_x$ such as $WS_2$ (here, x is a positive real number); a sulfide of antimony represented by Formula $SbS_x$ such as $Sb_2S_3$ (here, x is a positive real number); and a sulfide of selenium represented by Formula $SeS_x$ such as $Se_5S_3$, $SeS_2$, or $SeS$ (here, x is a positive real number).

Examples of the nitride that can be used as the negative electrode active material of the lithium secondary battery include a lithium-containing nitride such as $Li_3N$ and $Li_{3-x}A_xN$ (here, A is one or both of Ni and Co, $0 < x < 3$).

Only one of the carbon material, the oxide, the sulfide, and the nitride may be used, or two or more thereof may be used in combination. The carbon material, the oxide, the sulfide, and the nitride may be any one of crystal materials and non-crystal materials.

Examples of the metal that can be used as the negative electrode active material of the lithium secondary battery include a lithium metal, a silicon metal, and a tin metal.

Examples of the alloy that can be used as the negative electrode active material of the lithium secondary battery include a lithium alloy such as Li-Al, Li-Ni, Li-Si, Li-Sn, or Li-Sn-Ni; a silicon alloy such as Si-Zn; a tin alloy such as Sn-Mn, Sn-Co, Sn-Ni, Sn-Cu, or Sn-La; and an alloy such as $Cu_2Sb$ or $La_3Ni_2Sn_7$.

These metals or alloys are mainly used alone as a negative electrode after being processed in a foil shape, for example.

Among the negative electrode active materials, the carbon material having graphite such as natural graphite or artificial graphite as a main component is preferable since an electric potential of a negative electrode is nearly not changed from a non-charge state to a full charge state during charging (electric potential flatness is good), an average discharge electric potential is low, a capacity retention rate at the time of repeated charge and discharge is high (a cycle characteristic is good), and the like. The shape of the carbon material is not particularly limited, and it may be any one of a flake shape such as natural graphite, a spherical shape such as mesocarbon microbeads, a fiber shape such as graphite carbon fiber, and an aggregate of fine powders.

The negative electrode mixture of the lithium secondary battery may contain a binder if necessary. Examples of the binder may include a thermoplastic resin. Examples thereof include PVdF, thermoplastic polyimide, carboxymethyl cellulose, and polyolefin resins such as polyethylene, and polypropylene. These may be used alone or as a mixture of two or more thereof.

(Negative Electrode Collector)

Examples of the negative electrode collector included in the negative electrode of the lithium secondary battery include a belt-like member including a metal material such as Cu, Ni, or stainless steel as a forming material. Among these, a belt-like member having Cu as a forming material and processed in a flake shape is preferable from the viewpoints of difficulty in creating an alloy with lithium and easiness in processing.

Examples of a method for supporting a negative electrode mixture on a negative electrode collector include, but are not particularly limited to, a method for pressure-molding and a method for making a negative electrode mixture into a paste using a solvent and the like, coating the negative electrode mixture paste on a negative electrode collector, drying, and pressing and fixing the paste thereon, similar to the case of the positive electrode.

(Separator)

For the separator included in the lithium secondary battery, materials made of a polyolefin resin such as polyethylene or polypropylene, a fluorine resin, or a nitrogen-containing aromatic polymer or the like and having a form of a porous film, a non-woven fabric, a woven fabric, or the like may be used. The separator may be formed by using one or two or more of these materials, or the separator may be formed by stacking these materials.

Examples of the separator of the lithium secondary battery include separators described in Japanese Patent Application Laid-Open No. 2000-30686 and Japanese Patent Application Laid-Open No. Hei10-324758 and the like. The thickness of the separator can be appropriately selected according to use conditions and the like, but from the viewpoints of increasing the volumetric energy density of the lithium secondary battery and decreasing the internal resistance, the thickness of the separator is preferably as small as possible, as long as a sufficient mechanical strength can be maintained, more preferably about 5 to 200 $\mu$m, and particularly preferably about 5 to 40 $\mu$m.

The separator of the lithium secondary battery preferably has a porous film including a thermoplastic resin. In the lithium secondary battery, when an abnormal current flows in the battery due to short circuit or the like between the positive and negative electrodes, it is preferable to block the current at the short-circuited point to prevent (shut down) the passage of an excessively large current. Here, the shutdown is executed when the separator at the short-circuited point is overheated due to short circuit and the temperature of the separator exceeds a preset operating temperature, which causes the porous film in the separator to soften or melt to block the micropores of the film. It is preferable that the separator maintain a shutdown state without the rupture of the film, even if the temperature in the lithium secondary battery increases to a certain elevated temperature after the shutdown.

Examples of the separator that can maintain a shutdown state without the rupture of the film, even if the temperature in the lithium secondary battery increases to a certain elevated temperature after the shutdown include a stacked film in which a heat resistant porous layer and a porous film are stacked. By using such a stacked film as the separator, the heat resistance of the secondary battery can be further improved. In the stacked film, the heat resistant porous layer may be stacked on both sides of the porous film.

(Stacked Film)

Hereinafter, the stacked film in which the heat resistant porous layer and the porous film are stacked one upon the other will be described.

In the stacked film used as the separator of the lithium secondary battery, the heat resistant porous layer is a layer having a heat resistance higher than that of the porous film. The heat resistant porous layer may be formed of an inorganic powder (first heat resistant porous layer), may be formed of a heat resistant resin (second heat resistant porous layer), or may be formed to include a heat resistant resin and a filler (third heat resistant porous layer). The heat resistant resin included in the heat resistant porous layer enables the heat resistant porous layer to be formed by a simple technique such as coating.

(First Heat Resistant Porous Layer)

When the heat resistant porous layer is formed of an inorganic powder, examples of the inorganic powder used for the heat resistant porous layer include powders composed of inorganic substances such as metal oxide, metal nitride, metal carbide, metal hydroxide, carbonate and sulfate, among which a powder composed of an (high insulating) inorganic substance having a low conductivity is preferably used. Specific examples thereof include powders composed of alumina, silica, titanium dioxide, and calcium carbonate. Such inorganic powders may be used alone or as a mixture of two or more thereof.

Because of its high chemical stability, an alumina powder is preferable among the powders composed of inorganic substances. It is more preferable that all particles included in the powder composed of an inorganic substance be alumina particles, and it is still more preferable that all particles included in the powder composed of an inorganic substance be alumina particles, a part or all of which be approximately spherical alumina particles.

(Second Heat Resistant Porous Layer)

When the heat resistant porous layer is formed of a heat resistant resin, examples of the heat resistant resin used for the heat resistant porous layer include polyamide, polyimide, polyamide-imide, polycarbonate, polyacetal, polysulfone, polyphenylene sulfide, polyether ketone, aromatic polyester, polyethersulfone, and polyetherimide. For further improving the heat resistance of the stacked film, polyamide, polyimide, polyamide-imide, polyethersulfone, and polyetherimide are preferable, and polyamide, polyimide, and polyamide-imide are more preferable.

The heat resistant resin used for the heat resistant porous layer is more preferably a nitrogen-containing aromatic polymer such as aromatic polyamide (para-oriented aromatic polyamide or meta-oriented aromatic polyamide), aromatic polyimide, and aromatic polyamide-imide, of which aromatic polyamide is particularly preferable. From the viewpoint of productivity, para-oriented aromatic polyamide (hereinafter, also referred to as para-aramid) is particularly preferable.

Examples of the heat resistant resin include poly-4-methylpentene-1 and cyclic olefin polymers.

The use of these heat resistant resins makes it possible to further improve the heat resistance of the stacked film used as the separator of the lithium secondary battery, that is, the thermal breakage temperature of the stacked film. Among these heat resistant resins, the use of the nitrogen-containing aromatic polymer may exhibit an improved compatibility with the electrolytic solution, that is, an improved liquid retention in the heat resistant porous layer, possibly because of the polarity in the molecules of the nitrogen-containing aromatic polymer. In such a case, the impregnation of the electrolytic solution proceeds more rapidly in the production of the lithium secondary battery, and the discharge and charge capacity of the lithium secondary battery also further increases.

The thermal breakage temperature of such a stacked film depends on the type of the heat resistant resin, and is selectively used depending on the condition and purpose of use. More specifically, the thermal breakage temperature may be controlled to around 400°C when the nitrogen-containing aromatic copolymer is used as the heat resistant resin, around 250°C for the poly-4-methylpentene-1, and around 300°C for the cyclic olefin polymer. When the heat resistant porous layer is formed of a powder composed of an inorganic substance, the thermal breakage temperature can also be controlled to, for example, 500°C or higher.

The para-aramid is obtained by condensation polymerization of a para-oriented aromatic diamine and a para-oriented aromatic dicarboxylic acid halide, and substantially composed of repeating units which are bonded through amide bonds in a para-direction of the aromatic rings or in an equivalent direction (for example, a direction extending coaxially or in parallel in opposite directions as in the case of 4,4'-biphenylene, 1,5-naphthalene, or 2,6-naphthalene or the like). Specific examples thereof include para-aramids having a para-oriented structure or an equivalent structure, such as poly(paraphenyleneterephthalamide), poly(parabenzamide), poly(4,4'-benzanilideterephthalamide), poly(para-phenylene-4,4'-biphenylenedicarboxylic acid amide), poly(para-phenylene-2,6-naphthalenedicarboxylic acid amide), poly(2-chloro-paraphenylene terephthalamide), and paraphenyleneterephthalamide/2,6-dichloroparaphenyleneterephthalamide copolymer.

The aromatic polyimide is preferably a fully aromatic polyimide produced by condensation polymerization of an aromatic dianhydride and a diamine.

Specific examples of the aromatic dianhydride used for condensation polymerization include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoropropane, and 3,3',4,4'-biphenyltetracarboxylic dianhydride.

Specific examples of the diamine used for condensation polymerization include oxydianiline, paraphenylendiamine, benzophenone diamine, 3,3'-methylenedianiline, 3,3'-diaminobenzophenone, 3,3'-diaminodiphenyl sulfone, and 1,5-naphthalenediamine.

As the aromatic polyimide, a polyimide that is soluble to a solvent can be suitably used. Examples of the polyimide include a polyimide which is a polycondensate of 3,3',4,4'-diphenylsulfone tetracarboxylic dianhydride and an aromatic diamine.

Examples of the aromatic polyamideimide include an aromatic polyamideimide obtained by condensation polymerization of an aromatic dicarboxylic acid and an aromatic diisocyanate, and an aromatic polyamideimide obtained by condensation polymerization of an aromatic diacid anhydride and an aromatic diisocyanate. Specific examples of the aromatic dicarboxylic acid include isophthalic acid and terephthalic acid. Specific examples of the aromatic diacid anhydride include anhydrous trimellitic acid. Specific examples of the aromatic diisocyanate include 4,4'-diphenylmethane diisocyanate, 2,4-tolylene diisocyanate, 2,6-tolylene diisocyanate, ortho-tolylene diisocyanate, and m-xylene diisocyanate.

For further improving the ion permeability, the heat resistant porous layer of the stacked film is preferably a thin layer, more preferably has a thickness of 1 μm or more and 10 μm or less, still more preferably 1 μm or more and 5 μm or less, and particularly preferably 1 μm or more and 4 μm or less. The heat resistant porous layer has micropores, and the size (diameter) of the pores is preferably 3 μm or less, and more preferably 1 μm or less.

(Third Heat Resistant Porous Layer)

When the heat resistant porous layer is formed to include a heat resistant resin and a filler, the heat resistant resin to be used may be the same as the one used for the above-mentioned second heat resistant porous layer. The filler to be used may be one or more selected from the group consisting of an organic powder, an inorganic powder, and a mixture thereof. It is preferable that particles included in the filler have an average particle size of 0.01 μm or more

and 1 $\mu$m or less.

Examples of the organic powder that can be used as the filler include powders composed of organic materials such as a homopolymer of or a copolymer including two or more of styrene, vinyl ketone, acrylonitrile, methyl methacrylate, ethyl methacrylate, glycidyl methacrylate, glycidyl acrylate, or methyl acrylate; a fluororesin such as PTFE, ethylene tetrafluoride-propylene hexafluoride copolymer, ethylene tetrafluoride-ethylene copolymer, or polyvinylidene fluoride; melamine resin; urea resin; polyolefin resin; and polymethacrylate. Such organic powders may be used alone or as a mixture of two or more thereof. Among these organic powders, PTFE powder is preferable because of high chemical stability.

Examples of the inorganic powder that can be used as the filler include the same powders as described above as the powders composed of inorganic substances used for the heat resistant porous layer.

When the heat resistant porous layer is formed to include the heat resistant resin and the filler, the content of the filler depends on the relative density of the material of the filler. However, for example, when all of the particles included in the filler are alumina particles, the mass of the filler is preferably 5 parts by mass or more and 95 parts by mass or less, more preferably 20 parts by mass or more and 95 parts by mass or less, and still more preferably 30 parts by mass or more and 90 parts by mass or less, relative to 100 parts by mass of the total mass of the heat resistant porous layer. These ranges can be appropriately set depending on the relative density of the material of the filler.

Examples of the shape of the filler include, but are not particularly limited to, an approximately spherical shape, a planar shape, a columnar shape, a needle shape, and a fibrous shape. The filler to be used may be particles of any of these shapes, but it is preferably in the form of approximately spherical particles because uniform pores can be easily formed. Examples of the approximately spherical particles include particles having an aspect ratio (major axis/minor axis) of 1 or more and 1.5 or less. The aspect ratio of the particles can be measured using an electron photomicrograph.

Preferably, the porous film in the stacked film used as the separator of the lithium secondary battery has micropores, and has a shutdown function. In this case, the porous film contains a thermoplastic resin.

For the size of the micropores in the porous film, smaller values are more preferable, and the size is more preferably 3 $\mu$m or less, and particularly preferably 1 $\mu$m or less. The porosity of the porous film can be appropriately selected according to use conditions and the like, but it is preferably 30% by volume or more and 80 by volume or less, and more preferably 40% by volume or more and 70% by volume or less. In the lithium secondary battery, when the temperature of the porous film exceeds a preset operating temperature, the porous film containing the thermoplastic resin can close the micropores as a result of the softening or fusing of the thermoplastic resin included in the porous film.

The thermoplastic resin used for the porous film is not particularly limited as long as it does not dissolve in the electrolytic solution used in the lithium secondary battery. Specific examples of the thermoplastic resin include polyolefin resins such as polyethylene and polypropylene, and thermoplastic polyurethane resins, and two or more of these resins may be used in the form of a mixture thereof.

In order to cause the separator to soften and shutdown at a lower temperature, it is preferable that the porous film contain polyethylene. Examples of the polyethylene include a low density polyethylene, a high density polyethylene, and a linear polyethylene. Another example of the polyethylene includes an ultra-high-molecular-weight polyethylene having a molecular weight of 1,000,000 or more.

In order to further improve a puncture strength of the porous film, it is preferable that the thermoplastic resin included in the porous film contain at least the ultra-high-molecular-weight polyethylene. In producing the porous film, it is preferable in some cases that the thermoplastic resin contain wax composed of polyolefin having a low molecular weight (weight average molecular weight of 10,000 or less).

The thickness of the porous film in the stacked film can be appropriately selected according to use conditions and the like, but it is preferably 3 $\mu$m or more and 30 $\mu$m or less, and more preferably 3 $\mu$m or more and 25 $\mu$m or less. The thickness of the stacked film can be appropriately selected according to use conditions and the like, but it is preferably 40 $\mu$m or less, and more preferably 30 $\mu$m or less. When the thickness of the heat resistant porous layer is A ($\mu$m) and the thickness of the porous film is B ($\mu$m), it is preferable that the value of A/B be 0.1 or more and 1 or less.

In the lithium secondary battery, for satisfactory permeation of the electrolyte through the separator during the use (charge and discharge) of the battery, the separator preferably has an air resistance of 50 sec/100 cc or more and 300 sec/100 cc or less, and more preferably 50 sec/100 cc or more and 200 sec/100 cc or less, as measured by Gurley method prescribed in JIS P 8117.

The porosity of the separator can be appropriately selected according to use conditions and the like, but it is preferably 30% by volume or more and 80 by volume or less, and more preferably 40% by volume or more and 70% by volume or less. The separator to be used may be obtained by stacking separators having different porosities.

(Electrolytic Solution)

The electrolytic solution included in the lithium secondary battery contains an electrolyte and an organic solvent.

Examples of the electrolyte contained in the electrolytic solution include lithium salts such as $LiClO_4$, $LiPF_6$,

LiAsF$_6$, LiSbF$_6$, LiBF$_4$, LiCF$_3$SO$_3$, LiN(SO$_2$CF$_3$)$_2$, LiN(SO$_2$C$_2$F$_5$)$_2$, LiN(SO$_2$CF$_3$)(COCF$_3$), Li(C$_4$F$_9$SO$_3$), LiC(SO$_2$CF$_3$)$_3$, Li$_2$B$_{10}$Cl$_{10}$, LiBOB (wherein "BOB" means bis(oxalato)borate), LiFSI (wherein FSI means bis(fluorosulfonyl)imide), a lithium salt of a lower aliphatic carboxylic acid, and LiAlCl$_4$. These may be used alone or as a mixture of two or more thereof. Among these, it is preferable to use electrolytes containing at least one fluorine-containing salt selected from the group consisting of LiPF$_6$, LiAsF$_6$, LiSbF$_6$, LiBF$_4$, LiCF$_3$SO$_3$, LiN(SO$_2$CF$_3$)$_2$, and LiC(SO$_2$CF$_3$)$_3$.

As the organic solvent included in the electrolyte, it is possible to use, for example, carbonates such as propylene carbonate, ethylene carbonate, dimethyl carbonate, diethyl carbonate, ethyl methyl carbonate, 4-trifluoromethyl-1,3-dioxolane-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyl tetrahydrofuran; esters such as methyl formate, methyl acetate, and y-butyrolactone; nitriles such as acetonitrile and butyronitrile; amides such as N,N-dimethyl formamide and N,N-dimethylacetoamide; carbamates such as 3-methyl-2-oxazolidone; sulfur-containing compounds such as sulfolane, dimethyl sulfoxide, and 1,3-propane sultone; or a solvent produced by further introducing a fluoro group into the above-described organic solvent (a solvent in which one or more hydrogen atoms included in the organic solvent is substituted by a fluorine atom). These may be used alone or as a mixture of two or more thereof.

Among these, a solvent mixture including a carbonate is preferable, and a solvent mixture of a cyclic carbonate and a non-cyclic carbonate and a solvent mixture of a cyclic carbonate and an ether are more preferable. As the solvent mixture of a cyclic carbonate and a non-cyclic carbonate, a solvent mixture including ethylene carbonate, dimethyl carbonate, and ethyl methyl carbonate is preferable. An electrolytic solution using the aforementioned solvent mixture has many advantages such as a wider operational temperature range, low tendency of deterioration even after charge/discharge at a high current rate, low tendency of deterioration even when used for a long period of time, and low decomposability even when a graphite material such as natural graphite or artificial graphite is used as the active material for the negative electrode.

For improving the stability of the lithium secondary battery, it is preferable to use an electrolytic solution including a lithium salt containing fluorine such as LiPF$_6$ and an organic solvent having a fluorine substituent. Among these, a solvent mixture including an ether having a fluorine substituent such as pentafluoropropyl methyl ether or 2,2,3,3-tetrafluoropropyl difluoromethyl ether and dimethyl carbonate is more preferable since a high capacity retention is achieved even when the battery is charged and discharged at a high current rate.

A solid electrolyte may be used instead of the aforementioned electrolytic solution. As the solid electrolyte, it is possible to use, for example, an organic polymer electrolyte such as a polyethylene oxide-type polymeric compound or a polymeric compound including at least one or more of polymer chain selected from a polyorganosiloxane chain or a polyoxyalkylene chain. It is also possible to use a so-called "gel-type" electrolyte including a polymeric compound retaining a non-aqueous electrolytic solution. Examples thereof include an inorganic solid electrolyte including a sulfide such as Li$_2$S-SiS$_2$, Li$_2$S-GeS$_2$, Li$_2$S-P$_2$S$_5$, Li$_2$S-B$_2$S$_3$, Li$_2$S-SiS$_2$-Li$_3$PO$_4$, Li$_2$S-SiS$_2$-Li$_2$SO$_4$, or Li$_2$S-GeS$_2$-P$_2$S$_5$. These may be used alone or as a mixture of two or more thereof. In some cases, the use of such a solid electrolyte may further improve the safety of the lithium secondary battery.

In the lithium secondary battery, the solid electrolyte, when used, may serve as a separator. In such a case, the separator may be omitted.

The positive electrode active material having a configuration as described above uses the positive electrode active material for secondary batteries of the present invention, whereby the lithium secondary battery using the positive electrode active material can exhibit excellent cycle characteristics under both room temperature and high temperature environments.

The positive electrode having a configuration as described above includes the positive electrode active material for secondary batteries of the present invention, whereby the lithium secondary battery can exhibit excellent cycle characteristics under both room temperature and high temperature environments.

Furthermore, the lithium secondary battery having a configuration as described above includes a positive electrode including the positive electrode active material for secondary batteries of the present invention, whereby the lithium secondary battery can exhibit better cycle characteristics than those of conventional batteries under both room temperature and high temperature environments.

Examples

Thereafter, Examples of the present invention will be described, but the present invention is not limited to these Examples as long as the gist of the present invention is not deviated from.

Method for Producing Positive Electrode Active Material for Secondary Batteries of Each of Examples 1 to 7 and Comparative Examples 1 to 4

Preparation of Nickel-Cobalt-Manganese Composite Hydroxide Particles Used for Each of Examples 3 and 4 and Comparative Examples 2 and 3

An aqueous solution in which nickel sulfate, cobalt sulfate, and manganese sulfate were dissolved at a predetermined ratio (atomic ratio of nickel : cobalt : manganese = 50 : 20 : 30), and an aqueous ammonium sulfate solution were added dropwise into a reaction tank equipped with a stirrer, and sodium hydroxide was added dropwise into the reaction tank at appropriate timings such that a reaction pH was set to 11.9 based on a reaction temperature of 30.0°C and a solution temperature of 40°C in the reaction tank to prepare a nickel-cobalt-manganese composite hydroxide. The prepared hydroxide was continuously overflowed from an overflow pipe of the reaction tank, taken out, and filtered, followed by performing treatments of water washing and drying at 100°C, thereby obtaining nickel-cobalt-manganese composite hydroxide particles that were precursors for a positive electrode active material for secondary batteries. The nickel-cobalt-manganese composite hydroxide particles had D50 of 3.9 $\mu$m and (D90 - D10)/D50 of 0.96.

Preparation of Nickel-Cobalt-Manganese Composite Hydroxide Particles Used for Each of Examples 1, 2, 6, and 7

The nickel-cobalt-manganese composite hydroxide particles used for each of Examples 3 and 4 and Comparative Examples 2 and 3 were classified with a dry classifier to prepare nickel-cobalt-manganese composite hydroxide particles having D50 of 4.2 to 4.4 $\mu$m and (D90 - D10)/D50 of 0.78 to 0.88.

Preparation of Nickel-Cobalt-Manganese Composite Hydroxide Particles Used for Each of Example 5 and Comparative Examples 1 and 4

An aqueous solution in which nickel sulfate, cobalt sulfate, and manganese sulfate were dissolved at a predetermined ratio (atomic ratio of nickel : cobalt : manganese = 50 : 20 : 30), and an aqueous ammonium sulfate solution were added dropwise into a reaction tank equipped with a stirrer, and sodium hydroxide was added dropwise into the reaction tank at appropriate timings such that a reaction pH was set to 11.4 based on a reaction temperature of 50.0°C and a solution temperature of 40°C in the reaction tank to prepare a nickel-cobalt-manganese composite hydroxide. The prepared hydroxide was overflowed from an overflow pipe of the reaction tank, continuously taken out, and filtered, followed by performing treatments of water washing, dewatering, and drying at 100°C, thereby obtaining nickel-cobalt-manganese composite hydroxide particles that were precursors for a positive electrode active material for secondary batteries. The nickel-cobalt-manganese composite hydroxide particles had D50 of 11.6 $\mu$m and (D90 - D10)/D50 of 0.90.

The D50 and (D90 - D10)/D50 values of the nickel-cobalt-manganese composite hydroxide particles used for each of Examples 1 to 7 and Comparative Examples 1 to 4 are shown in the following Table 1. The D50, D90, and D10 values of the following Table 1 were obtained by using a laser diffraction particle size distribution analyzer (LA-950, manufactured by Horiba, Ltd.). 0.1 g of the nickel-cobalt-manganese composite hydroxide particles were charged into 50 ml of a 0.2 mass % sodium hexametaphosphate aqueous solution, to obtain a dispersion liquid containing the particles dispersed. The particle size distribution of the obtained dispersion liquid was measured to obtain a cumulative particle size distribution curve on a volumetric basis. In the obtained cumulative particle size distribution curve, a particle size (D10) value at 10% cumulation counted from the smallest particle size side thereof, a particle size (D50) value at 50% cumulation counted from the smallest particle size side thereof, and a particle size (D90) value at 90% cumulation counted from the smallest particle size side thereof were taken as the average particle size of the nickel-cobalt-manganese composite hydroxide particles.

Thereafter, a lithium carbonate powder was added to the nickel-cobalt-manganese composite hydroxide particles as a dry powder used for each of Examples 1 to 7 and Comparative Examples 1 to 4 such that an atomic ratio of Li/M1 shown in the following Table 1 was set, followed by mixing to obtain a mixed powder of the nickel-cobalt-manganese composite hydroxide particles and lithium carbonate. A sagger was filled with the obtained mixed powder, followed by performing firing under firing temperature conditions shown in the following Table 1. The firing was performed under a condition of a temperature rising speed of 200°C/min under a dry air atmosphere using a box type furnace. After the firing step, the fired product was pulverized by using a pulverizer (Supermasscolloider MKCA6-2, manufactured by MASUKO SANGYO CO., LTD.), and the pulverized product was then sieved with a 325-mesh sieve, followed by performing the next step. A sagger having an inner dimension of 130 × 130 × 88 mm was filled with the mixed powder in a main firing step or the mixed powder after a pre-firing step such that the amount of the mixed powder filled in the sagger was set to S/V shown in the following Table 1.

In Examples 3 and 6, before a main firing step, 0.3 mol % of $ZrO_2$ was added to the nickel-cobalt-manganese composite hydroxide particles, followed by performing main firing. Furthermore, before a tempering step, 1.0 mol % of

$Al_2O_3$ was added to the nickel-cobalt-manganese composite hydroxide particles, followed by performing tempering. In Example 4, before a tempering step, 1.0 mol % of $Al_2O_3$ was added to the nickel-cobalt-manganese composite hydroxide particles, followed by tempering. In Example 7, before a main firing step, 0.3 mol % of $ZrO_2$ was added to the nickel-cobalt-manganese composite hydroxide particles, followed by performing main firing.

As described above, the positive electrode active materials for secondary batteries of Examples 1 to 7 and Comparative examples 1 to 4 were produced. The D50 values of the positive electrode active materials for secondary batteries of Examples 1 to 7 and Comparative Examples 1 to 4 are shown in the following Table 2. The D50 values of the following Table 2 were measured by the same method as that of the composite hydroxide using a laser diffraction particle size distribution analyzer (LA-950, manufactured by Horiba, Ltd.).

[Table 1]

| | Particle size of precursor | | Condition during mixing | Pre-firing step | | Main firing step | | | Tempering step | | Additive |
|---|---|---|---|---|---|---|---|---|---|---|---|
| | D50 (μm) | (D90-D10) /D50 (-) | Li/M1 (-) | Temperature (°C) | Time (h) | Surface area (S) of filler During filling/ volume (V) (mm²/mm³) | Temperature (°C) | Time (h) | Temperature (°C) | Time (h) | |
| Example 1 | 4,3 | 0,78 | 1,08 | 730 | 5 | 0,14 | 970 | 10 | Not performed | Not performed | - |
| Example 2 | 4,3 | 0,78 | 1,03 | 730 | 5 | 0,14 | 1000 | 10 | Not performed | Not performed | - |
| Example 3 | 3,9 | 0,96 | 1,03 | 730 | 5 | 0,24 | 1000 | 10 | 760 | 5 | Zr, Al |
| Example 4 | 3,9 | 0,96 | 1,08 | Not performed | Not performed | 0,08 | 970 | 10 | 760 | 5 | Al |
| Example 5 | 11,6 | 0,90 | 1,03 | 730 | 5 | 0,17 | 1000 | 10 | Not performed | Not performed | - |
| Example 6 | 4,4 | 0,78 | 1,03 | 730 | 5 | 0,14 | 1000 | 10 | 760 | 5 | Zr, Al |
| Example 7 | 4,2 | 0,88 | 1,03 | Not performed | Not performed | 0,14 | 1000 | 10 | Not performed | Not performed | Zr |
| | | | | | | | | | | | |
| Comparative Example 1 | 11,6 | 0,90 | 1,03 | 730 | 5 | 0,06 | 940 | 10 | Not performed | Not performed | - |
| Comparative Example 2 | 3,9 | 0,96 | 1,03 | Not performed | Not performed | 0,08 | 1000 | 10 | Not performed | Not performed | - |
| Comparative Example 3 | 3,9 | 0,96 | 1,08 | Not performed | Not performed | 0,08 | 970 | 10 | Not performed | Not performed | - |
| Comparative Example 4 | 11,6 | 0,90 | 1,03 | 730 | 5 | 0,07 | 1000 | 10 | Not performed | Not performed | - |

The evaluation items of the positive electrode active materials for secondary batteries of Examples and Comparative Examples are as follows.

(1) Composition Analysis of Positive Electrode Active Material for Secondary Batteries

Powders of the positive electrode active materials for secondary batteries obtained in Examples 1 to 7 and Comparative Examples 1 to 4 were dissolved in hydrochloric acid, and the positive electrode active materials for secondary batteries were then
subjected to composition analysis using an inductively-coupled plasma atomic emission spectrometer (Optima7300DV, manufactured by Perkin Elmer Japan Co., Ltd.).

(2) Full Width at Half Maximum of Two Diffraction Peaks in Range of $2\theta = 64.5 \pm 1°$

The positive electrode active materials for secondary batteries obtained in Examples 1 to 7 and Comparative Examples 1 to 4 were subjected to powder X-ray diffraction measurement using an X-ray diffractometer (UltimaIV, manufactured by Rigaku). A dedicated substrate was filled with the powder of the positive electrode active material for secondary batteries obtained as above, followed by performing measurement under conditions of a diffraction angle of $2\theta = 10°$ to $100°$, a sampling width of 0.03°, and a scanning speed of 20°/min using a Cu-K$\alpha$ ray source (40 kV/40 mA), thereby obtaining a powder X-ray diffraction pattern. From the powder X-ray diffraction pattern, $\alpha$ is a full width at half maximum of a lower angle peak among two peaks appearing in a range of $64.5 \pm 1°$, and $\beta$ is a full width at half maximum of a higher angle peak among the two diffraction peaks. A half-value width ratio $\beta/\alpha$ was calculated by using integrated X-ray powder diffraction software PDXL.

(3) Average Particle Strength

The average particle strength was measured by a micro compression tester MCT-510, manufactured by Shimadzu Corporation.

The average particle strength of the positive electrode active material for secondary batteries obtained in each of Examples 1 to 7 and Comparative Examples 1 to 4 were measured using the micro compression tester (MCT-510, manufactured by Shimadzu Corporation). A test pressure was applied under conditions of an upper limit test force (load) of 200 mN and a load velocity constant of 86.7 (load velocity: 0.4464 mN/S) to a single positive electrode active material for secondary batteries randomly selected among the positive electrode active materials for secondary batteries in the range of the volume average particle size (D50) $\pm 1.0\ \mu$m measured by the method, to measure an amount of displacement of the positive electrode active material for secondary batteries. When the test pressure was gradually increased, the pressure value at which the amount of displacement was maximum while the test pressure was almost constant was taken as a test force (P), and the strength (St) was calculated by the formula by Hiramatsu et al. shown in the following expression (Journal of the Mining and Metallurgical Institute of Japan, Vol. 81, (1965)). This operation was performed for a total of ten particles, and the average particle strength was calculated from the average value of the particle strengths of the ten particles.

$$St = 2.8 \times P/(\pi \times d \times d)\ (d: particle\ size)$$

(4) BET Specific Surface Area

The BET specific surface area of the positive electrode active material for secondary batteries obtained in each of Examples 1 to 7 and Comparative Examples 1 to 4 was measured according to a one-point BET method by using a surface area measuring device (Macsorb, manufactured by Mountech Co., Ltd.).

(5) Rate of Change of Lattice Constant between before and after Cycle Test

A laminated cell before and after a cycle test used for a capacity retention ratio (cycle characteristics) to be described later was disassembled, and a rate of change of a lattice constant of a positive electrode between before and after a cycle test was measured using an X-ray diffractometer (D8 ADVANCE, manufactured by Bruker Inc.). Specifically, first, a positive electrode before and after a cycle test was attached to a glass plate, followed by performing measurement under conditions of a diffraction angle of $2\theta = 10°$ to $100°$, a sampling width of 0.0217°, and a scanning speed of 2.6°/min using a Cu-K$\alpha$ ray source (40 kV, 40 mA), thereby obtaining an X-ray diffraction pattern. Then, lattice constants of an a-axis and a c-axis were obtained from the X-ray diffraction pattern using XRD analysis software TOPAS, and a rate of change of a lattice constant between before and after the cycle tests at 25°C and 60°C was calculated from (a-axis before cycle test/a-axis after cycle test) × 100 and (c-axis before cycle test/c-axis after cycle test) × 100.

Preparation of Positive Electrode

The positive electrode active material for secondary batteries (positive electrode active material) obtained in each of Examples 1 to 7 and Comparative Examples 1 to 4, a conductive material (acetylene black), and a binder (PVdF) were added and kneaded so as to provide a composition of positive electrode active material : conductive material : binder = 90 : 5 : 5 (mass ratio), thereby preparing a paste-like positive electrode mixture. During the preparation of the positive electrode mixture, N-methyl-2-pyrrolidone was used as an organic solvent.
The obtained positive electrode mixture was applied to a 15 μm-thick Al foil serving as a current collector such that a mass per unit area was set to 10 mg/cm$^2$, and vacuum-dried at 120°C for 8 hours to obtain a positive electrode. The positive electrode had an electrode area of 9 cm$^2$.

Preparation of Negative Electrode

As a negative electrode, graphite (positive electrode active material), a thickener (CMC), and a binder (SBR400) were added and kneaded so as to provide a composition of negative electrode active material: thickener : binder = 100 : 1 : 1 (mass ratio), to prepare a paste-like negative electrode mixture. During the preparation of the negative electrode mixture, water was used as a solvent.
The obtained negative electrode mixture was applied to a 10 μm-thick Cu foil serving as a collector, and vacuum-dried at 120°C for 8 hours, to obtain a negative electrode. The negative electrode had an electrode area of 12 cm$^2$.

Preparation of Lithium Secondary Battery (Laminated Cell)

The following operation was performed within a glove box having a dry air atmosphere having a dew point of -60°C.
The positive electrode prepared in "Preparation of Positive Electrode" was placed on a laminate with an aluminum foil surface facing down, and a stacked film separator (a heat resistant porous layer (thickness: 16 μm) was stacked on a polyethylene porous film) was placed thereon. Furthermore, among the negative electrodes prepared in "Preparation of Negative Electrode", a negative electrode having an NP ratio of 1.1 was placed on the stacked film separator with an aluminum foil surface facing up, followed by stacking a laminate. Three sides were clamped by a sealer, followed by vacuum-drying at 60°C for 10 hours. 1.4 g of an electrolytic solution was injected thereto, followed by sealing the remaining one side in the vacuum. The electrolytic solution was prepared by dissolving LiPF$_6$ at 1 mol/l in a mixture solution of ethylene carbonate, dimethyl carbonate, and ethyl methyl carbonate at 3 : 5 : 2 (volume ratio).
The battery prepared in "Preparation of Lithium Secondary Battery (Laminated Cell)" was subjected to a conversion step in order to form an SEI coating under conditions shown below.
Temperature: 25°C, maximum charge voltage: 4.2 V, minimum discharge voltage: 2.7 V (only tenth and eleventh cycles: 3.0 V)

First cycle: charge time: 20 hours, charge current: 0.05 C, charge system: CCCV 0.01 C Cut, discharge time: 10 hours, discharge current: 0.1 C, discharge system: CC
Second to fourth cycles: charge time: 10 hours, charge current: 0.1 C, charge system: CCCV 0.01 C Cut, discharge time: 5 hours, discharge current: 0.2 C, discharge system: CC
Fifth to ninth cycles: charge time: 5 hours, charge current: 0.2 C, charge system: CCCV 0.05 C Cut, discharge time: 5 hours, discharge current: 0.2 C, discharge system: CC
Tenth and eleventh cycles: charge time: 5 hours, charge current: 0.2 C, charge system: CCCV 0.05 C Cut, discharge time: 5 hours, discharge current: 0.2 C, discharge system: CC

(6) Capacity Retention Ratio (Cycle Characteristics)

In order to subject the battery subjected to the conversion step to exact capacity measurement, the battery was charged and discharged for 2 cycles at 0.2 C before charge and discharge. Then, the battery was subjected to a charge/discharge test under conditions shown below. In the charge/discharge test, a charge capacity and a discharge capacity were obtained in the following manner. A capacity retention ratio was calculated on the basis of a discharge capacity at the first cycle. Each test was performed at N = 3, and the average value thereof was taken as the capacity retention ratio of each active material.
Test temperature: 25°C

Condition during charge: maximum charge voltage: 4.2 V, charge time: 0.5 hour, charge current: 2 C, CC
Condition during discharge: minimum discharge voltage: 3.0 V, discharge time: 0.5 hour, discharge current: 2 C, CC
Number of times of charges and discharges: 1000
Test temperature: 60°C
Condition during charge: maximum charge voltage: 4.2 V, charge time: 0.5 hour, charge current: 2 C, CC
Condition during discharge: minimum discharge voltage: 3.0 V, discharge time: 0.5 hour, discharge current: 2 C, CC
Number of times of charges and discharges: 500

The results of the evaluation items are shown in the following Tables 2 to 4.

[Table 2]

| | Composition | | | | | D50 ($\mu$m) | BET specific surface area ($m^2$/g) | Average particle strength (MPa) | $\beta/\alpha$ (-) |
|---|---|---|---|---|---|---|---|---|---|
| | Li | M1 | M2 | M1 (mol%) | Kind of M2 | | | | |
| | a | x | y | | | | | | |
| Example 1 | 0,07 | 1,000 | 0,000 | Ni:Co:Mn=50.3:20.2:29.5 | - | 5,9 | 0,61 | 310 | 1,05 |
| Example 2 | 0,02 | 1,000 | 0,000 | Ni:Co:Mn=50.3:20.2:29.5 | - | 6,6 | 0,44 | 510 | 1,05 |
| Example 3 | 0,00 | 0,989 | 0,011 | Ni:Co:Mn=51.1:20.0:29.9 | Zr, Al | 6,6 | 0,47 | 340 | 1,09 |
| Example 4 | 0,08 | 0,992 | 0,008 | Ni:Co:Mn=49.9:20.1:30.0 | Al | 7,6 | 0,59 | 300 | 1,06 |
| Example 5 | 0,05 | 1,000 | 0,000 | Ni:Co:Mn=50.2:19.9:30.0 | - | 10,6 | 0,37 | 370 | 1,03 |
| Example 6 | 0,04 | 0,989 | 0,011 | Ni:Co:Mn=50.3:20.1:29.6 | Zr, Al | 8,0 | 0,50 | 640 | 1,13 |
| Example 7 | 0,04 | 0,998 | 0,002 | Ni:Co:Mn=49.7:20.0:30.3 | Zr | 9,4 | 0,35 | 400 | 0,98 |
| Comparative Example 1 | 0,05 | 1,000 | 0,000 | Ni:Co:Mn=50.1:19.8:30.1 | - | 11,3 | 0,27 | 60 | 0,92 |
| Comparative Example 2 | 0,02 | 1,000 | 0,000 | Ni:Co:Mn=50.1:20.0:29.9 | - | 8,1 | 0,39 | 160 | 0,96 |
| Comparative Example 3 | 0,07 | 1,000 | 0,000 | Ni:Co:Mn=50.0:20.0:30.0 | - | 7,0 | 0,48 | 130 | 1,03 |
| Comparative Example 4 | 0,03 | 1,000 | 0,000 | Ni:Co:Mn=50.5:19.7:29.8 | - | 10,1 | 0,35 | 80 | 1,07 |

[Table 3]

| | Rate of change of lattice constant before and after cycle test (%) | | | |
|---|---|---|---|---|
| | 25°C | | 60°C | |
| | a-axis | c-axis | a-axis | c-axis |
| Example 1 | 99,53 | 100,47 | 99,33 | 100,77 |
| Example 2 | 99,52 | 100,54 | 99,32 | 100,81 |
| Example 3 | 99,50 | 100,51 | 99,40 | 100,68 |
| Example 4 | 99,52 | 100,55 | 99,45 | 100,69 |
| Example 5 | 99,51 | 100,62 | 99,34 | 100,90 |
| Example 6 | 99,48 | 100,64 | 99,35 | 100,74 |
| Example 7 | 99,45 | 100,64 | 99,3 | 100,83 |
| Comparative Example 1 | 99,55 | 100,41 | 99,46 | 100,66 |
| Comparative Example 2 | 99,50 | 100,59 | 99,26 | 100,86 |
| Comparative Example 3 | 99,50 | 100,55 | 99,24 | 100,94 |
| Comparative Example 4 | 99,45 | 100,67 | 99,25 | 100,87 |

[Table 4]

| | Capacity retention ratio (%) | |
|---|---|---|
| | 1000 cycles at 25°C | 500 cycles at 60°C |
| Example 1 | 87 | 76 |
| Example 2 | 85 | 75 |
| Example 3 | 88 | 80 |
| Example 4 | 89 | 88 |
| Example 5 | 87 | 79 |
| Example 6 | 92 | 80 |
| Example 7 | 91 | 75 |
| Comparative Example 1 | 76 | 60 |
| Comparative Example 2 | 83 | 73 |
| Comparative Example 3 | 79 | 69 |
| Comparative Example 4 | 84 | 73 |

From the above Tables 2 and 4, in the positive electrode active materials for secondary batteries of Examples 1 to 7 which had average particle strength of 200 MPa or more and in which $\beta/\alpha$ was set to satisfy $0.97 \leq \beta/\alpha \leq 1.25$ from the peaks of the powder X-ray diffraction pattern using $CuK\alpha$ rays, a capacity retention ratio or more for 1000 cycles at 25°C was 80% or more, and a capacity retention ratio for 500 cycles at 60°C was 75% or more, whereby the positive electrode active materials for secondary batteries could exhibit excellent cycle characteristics under both room temperature and high temperature environments. From the above Tables 2, 3, and 4, in the positive electrode active materials for secondary batteries of Examples 1 to 7 which had average particle strength of 200 MPa or more and in which a rate of change of a lattice constant between before and after a cycle test in both an a-axis and a c-axis in the tests at 25°C and 60°C was 99.30% or more and 100.90% or less, a capacity retention ratio for 1000 cycles at 25°C was 80% or more, and a capacity retention ratio for 500 cycles at 60°C was 75% or more, whereby the positive electrode active materials for secondary batteries could exhibit excellent cycle characteristics under both room temperature and high temperature environments. From Table 2, the positive electrode active materials for secondary batteries of Examples 1 to 7 had good D50 and a good BET specific surface area.

In particular, in Examples 3 4, and 6 having $1.06 \leq \beta/\alpha \leq 1.13$, a capacity retention ratio for 1000 cycles at 25°C was 88% or more and a capacity retention ratio for 500 cycles at 60°C was 80% or more, whereby the positive electrode active materials for secondary batteries could exhibit better cycle characteristics under both room temperature and high temperature environments. From the above Tables 1 and 4, a capacity retention ratio for 1000 cycles at 25°C in Example 6 in which (D90 - D10)/D50 of the nickel-cobalt-manganese composite hydroxide particles was 0.78 was further improved as compared with Example 3 in which (D90 - D10)/D50 was 0.96, and firing conditions were the same as those of Example 6. Therefore, (D90 - D10)/D50 of the composite hydroxide particles was controlled to 0.80 or less, which provided further improved cycle characteristics at a room temperature.

From the above Tables 1 and 4, in Examples 1 to 7 in which at least one of a pre-firing step, a tempering step, and a step of adding an additive ($Al_2O_3$ and/or $ZrO_2$ containing an M2 metal element) was performed in addition to a main firing step of firing at a firing temperature represented by $p \geq -600q + 1603$ (in the formula: q is an atomic ratio (Li/M1) of Li to a total of the metal element (M1) composed of at least one or more of Ni, Co, and Mn, and is set to satisfy $1.00 \leq q \leq 1.30$; and p is a main firing temperature and means $940°C < p \leq 1100°C$), the positive electrode active materials for secondary batteries that could exhibit excellent cycle characteristics under both room temperature and high temperature environments could be produced.

In Examples 1 to 7 that can exhibit excellent cycle characteristics under both room temperature and high temperature environments, a good BET specific surface area of 0.35 m² to 6.1 m²/g could be provided. In the above Examples 1 to 7, surface area (S) of mixed powder during filling/volume (V) was in the range of 0.08 to 0.24 mm²/mm³.

Meanwhile, from the above Tables 2 and 4, in the positive electrode active materials for secondary batteries of Comparative Examples 1 and 2 having average particle strength of less than 200 MPa and $\beta/\alpha$ of 0.96 or less, a capacity retention ratio for 500 cycles at 60°C was 60% or more and 73% or less, so that the positive electrode active materials for secondary batteries could not exhibit excellent cycle characteristics under a high temperature environment. From the above Tables 2, 3 and 4, in Comparative Examples 2 and 4 which had average particle strength of less than 200 MPa, and in which a rate of change of a lattice constant between before and after a cycle test in an a-axis was 99.25% to 99.26% in the test at 60°C, a capacity retention ratio for 500 cycles at 60°C was 73%, so that Examples 2 and 4 could not exhibit excellent cycle characteristics under a high temperature environment. From the above Tables 2, 3 and 4, in the positive electrode active material for secondary batteries of Comparative Example 3 which had average particle strength of less than 200 MPa and for which a rate of change of a lattice constant between before and after a cycle test in both an a-axis and a c-axis in the test at 60°C was outside the range of 99.30% or more and 100.90% or less, a capacity retention ratio for 1000 cycles at 25°C was 79%, and a capacity retention ratio for 500 cycles at 60°C was 69%, so that the positive electrode active material for secondary batteries could not exhibit excellent cycle characteristics under both room temperature and high temperature environments.

From the above tables 1 and 4, in Comparative Example 1 in which a pre-firing step was performed without performing main firing at a firing temperature represented by $p \geq -600q + 1603$ (in the formula: q is an atomic ratio (Li/M1) of Li to a total of the metal element (M1) composed of at least one or more of Ni, Co, and Mn, and is set to satisfy $1.00 \leq q \leq 1.30$; and p is a main firing temperature and means $940°C < p \leq 1100°C$), and S/V when filling a sagger with a mixture was 0.06 cm²/cm³, excellent cycle characteristics could not be exhibited under both room temperature and high temperature environments, as described above. In Comparative Examples 2 and 3 in which only a main firing step was performed as a firing step, and an M2 metal element was not added, excellent cycle characteristics could not be stably provided from a room temperature region to a high temperature region as described above. In Comparative Example 4 in which a pre-firing step and a main firing step were performed as with Examples, but S/V when filling a sagger with a mixture was 0.07 cm²/cm³, excellent cycle characteristics could not be stably provided from a room temperature region to a high temperature region as described above.

Industrial Applicability

Since the positive electrode active material for secondary batteries of the present invention can exhibit excellent cycle characteristics under both room temperature and high temperature environments, the positive electrode active material for secondary batteries can be utilized in a variety of fields. For example, the positive electrode active material for secondary has a high utility value in a field in which it is mounted on an apparatus used in a varying usage environment such as an ambient temperature.

List of Reference Signs

1 separator
2 positive electrode

3 negative electrode
6 electrolytic solution
10 lithium secondary battery

**Claims**

1. A positive electrode active material for secondary batteries having a layered structure containing at least one or more of nickel, cobalt, and manganese, as single-crystal particles and/or secondary particles that are aggregates of a plurality of primary particles,
   wherein:

   an average particle strength of particles having a particle size of (D50) $\pm$ 1.0 $\mu$m is 200 MPa or more, wherein (D50) is a particle size at a cumulative volume percentage of 50% by volume; and
   $\beta/\alpha$ is set to satisfy $0.97 \leq \beta/\alpha \leq 1.25$, provided that $\alpha$ is a full width at half maximum of a lower angle peak among two diffraction peaks appearing in a range of $2\theta = 64.5 \pm 1°$ in powder X-ray diffraction measurement using CuK$\alpha$ rays, and $\beta$ is a full width at half maximum of a higher angle peak among the diffraction peaks.

2. A positive electrode active material for secondary batteries having a layered structure containing at least one or more of nickel, cobalt, and manganese, as single-crystal particles and/or secondary particles that are aggregates of a plurality of primary particles,
   wherein:

   an average particle strength of particles having a particle size of (D50) $\pm$ 1.0 $\mu$m is 200 MPa or more, wherein (D50) is a particle size at a cumulative volume percentage of 50% by volume; and
   when a rate of change of a lattice constant between before and after a cycle test is represented by (a-axis before cycle test/a-axis after cycle test) $\times$ 100 = A and (c-axis before cycle test/c-axis after cycle test) $\times$ 100 = C in X-ray diffraction measurement of a positive electrode before and after the cycle test using CuK$\alpha$ rays, at least one of A and C is 99.30% or more and 100.90% or less in the cycle tests at 25°C and 60°C.

3. The positive electrode active material for secondary batteries according to claim 1 or 2, represented by the following general formula (1):

   $$Li[Li_a(M1_xM2_y)_{1-a}]O_{2+b} \qquad (1)$$

   wherein:

   $0 \leq a \leq 0.30$, $-0.30 \leq b \leq 0.30$, $0.9 \leq x \leq 1.0$, $0 \leq y \leq 0.1$, and $x + y = 1$ are satisfied;
   M1 means a metal element composed of at least one or more of Ni, Co, and Mn; and
   M2 means at least one metal element selected from the group consisting of Fe, Cu, Ti, Mg, Al, W, Zn, Sn, Zr, Ga, V, B, Mo, As, Ge, P, Pb, Si, Sb, Nb, Ta, Re, and Bi.

4. The positive electrode active material for secondary batteries according to any one of claims 1 to 3, wherein the D50 that is a particle size at a cumulative volume percentage of 50% is 2.0 $\mu$m or more and 20.0 $\mu$m or less.

5. The positive electrode active material for secondary batteries according to any one of claims 1 to 4, wherein a BET specific surface area of the positive electrode active material is 0.1 $m^2$/g or more and 5.0 $m^2$/g or less.

6. A secondary battery comprising the positive electrode active material for secondary batteries according to any one of claims 1 to 5.

7. A method for producing a positive electrode active material for secondary batteries,
   the method comprising:

   a step of adding a lithium (Li) compound to composite hydroxide particles containing at least one or more of nickel, cobalt, and manganese such that an atomic ratio of Li to a metal element (M1) composed of at least one or more of Ni, Co, and Mn is set to satisfy $1.00 \leq Li/M1 \leq 1.30$, to obtain a mixture of the lithium compound with the composite hydroxide particles; and

a main firing step of firing the mixture at a firing temperature represented by the following formula:

$$p \geq -600q + 1603$$

wherein: q is an atomic ratio (Li/M1) of Li to a total of the metal element (M1) composed of at least one or more of nickel, cobalt, and manganese, and is set to satisfy $1.00 \leq q \leq 1.30$; and p is a main firing temperature and means $940°C < p \leq 1100°C$,
the method further comprising, in addition to the main firing step, at least one of the following steps (1) to (3):

(1) a pre-firing step performed at a firing temperature of 300°C or higher and 800°C or lower before the main firing step;
(2) a tempering step performed at a firing temperature of 600°C or higher and 900°C or lower after the main firing step; and
(3) a step of adding a metal represented by M2 before the main firing step and/or the tempering step, wherein M2 means at least one metal element selected from the group consisting of Fe, Cu, Ti, Mg, Al, W, Zn, Sn, Zr, Ga, V, B, Mo, As, Ge, P, Pb, Si, Sb, Nb, Ta, Re, and Bi.

8. The method according to claim 7, comprising a step of setting a particle size distribution width of the composite hydroxide particles so as to satisfy $0.40 \leq (D90 - D10)/D50 \leq 1.00$ before the step of mixing the lithium compound with the composite hydroxide particles.

9. The method according to claim 7 or 8, wherein a proportion of a surface area (S) of the mixture including a contact surface with a sagger to a volume (V) of the mixture when filling the sagger with the mixture in the main firing step is set to satisfy $0.08 \leq S/V \leq 2.00$.

FIG.1

FIG.2A

FIG.2B

## INTERNATIONAL SEARCH REPORT

| International application No. |
| --- |
| PCT/JP2019/034407 |

**A. CLASSIFICATION OF SUBJECT MATTER**
Int.Cl. H01M4/525(2010.01)i, C01G53/00(2006.01)i, H01M4/505(2010.01)i

According to International Patent Classification (IPC) or to both national classification and IPC

**B. FIELDS SEARCHED**

Minimum documentation searched (classification system followed by classification symbols)
Int.Cl. H01M4/525, C01G53/00, H01M4/505

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2007/116971 A1 (MITSUBISHI CHEMICAL CORP.) 18 October 2007 & JP 2008-103308 A & JP 2008-108692 A & KR 10-2008-0108222 A & JP 2008-305777 A & EP 2006937 A2 & CN 101379637 A & US 2009/0104530 A1 | 1-9 |
| A | WO 2013/038918 A1 (SANYO ELECTRIC CO., LTD.) 21 March 2013 & CN 103782423 A & US 2014/0227599 A1 | 1-9 |

☒ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 November 2019 (22.11.2019) | 03 December 2019 (03.12.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/034407 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2013-107791 A (SUMITOMO CHEMICAL CO., LTD.) 06 June 2013 (Family: none) | 1-9 |
| A | WO 2018/110256 A1 (SUMITOMO CHEMICAL CO., LTD.) 21 June 2018 & JP 2018-95523 A & KR 10-2019-0088490 A & CN 110072816 A | 1-9 |
| A | JP 2004-335152 A (SUMITOMO METAL MINING CO., LTD.) 25 November 2004 (Family: none) | 1-9 |
| A | JP 2007-257985 A (SUMITOMO METAL MINING CO., LTD.) 04 October 2007 & EP 1837936 A2 & CN 101047237 A & US 2007/0248883 A1 | 1-9 |
| A | KR 10-2011-0063376 A (L&F ADVANCED MATERIALS CO., LTD.) 10 June 2011 (Family: none) | 1-9 |
| A | WO 2016/129361 A1 (JX NIPPON MINING & METALS CORPORATION) 18 August 2016 & JP 2016-149258 A | 1-9 |
| A | WO 2013/161619 A1 (MITSUI MINING & SMELTING CO., LTD.) 31 October 2013 & JP 2013-232318 A & KR 10-2014-0011414 A & CN 103930374 A & US 2015/0093641 A1 | 1-9 |
| A | JP 2003-002661 A (SEIMI CHEM CO., LTD.) 08 January 2003 (Family: none) | 1-9 |
| A | WO 2017/169184 A1 (PANASONIC IP MANAGEMENT CO., LTD.) 05 October 2017 & CN 108780889 A & US 2019/0103605 A1 | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018045998 A
- JP 2000030686 A
- JP HEI10324758 A

**Non-patent literature cited in the description**

- *Journal of the Mining and Metallurgical Institute of Japan,* 1965, vol. 81